# EUROPEAN PATENT APPLICATION

(11) **EP 2 903 359 A1**
(43) Date of publication of application: **05.08.2015**
(21) Application number: 14250015.6
(22) Date of filing: 03.02.2014
(51) Int. Cl.: H04W 56/00

(54) **Network**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

The present invention provides a method of synchronising base stations in a mobile communications network. A mobile terminal which is within the coverage area of both a first base station and a second base station can receive synchronisation information from the first base station and then then forward it to the second base station.

## Description

The present invention relates to a method of operating a mobile communications network, and in particular a method of providing synchronisation data in a mobile communications network.

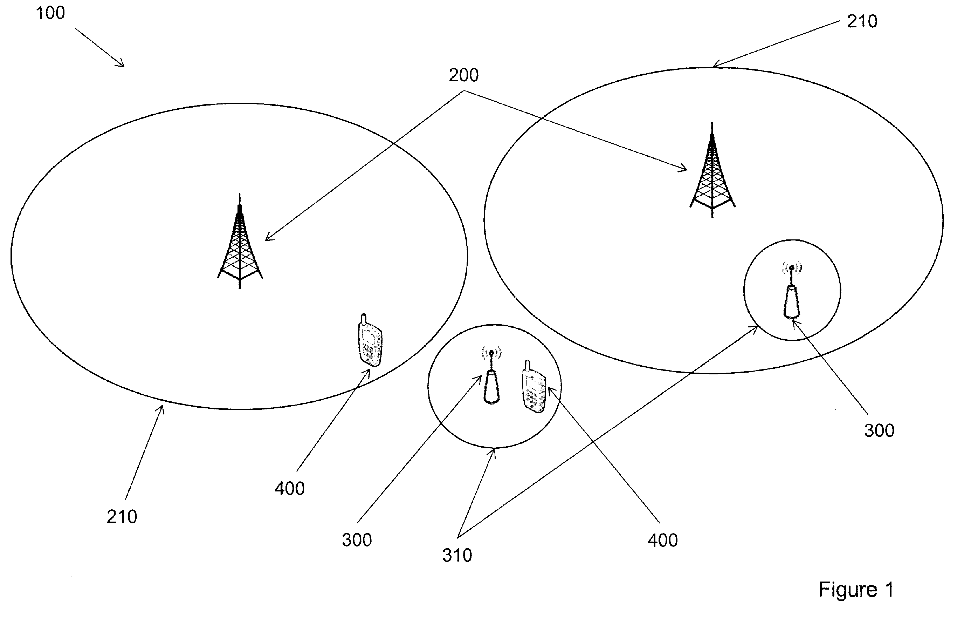

Figure 1 shows a schematic depiction of a known mobile communications network 100. The network comprises a plurality of base stations 200 which define macrocells 210 within the network. Mobile terminals 400 within the macrocells 210 can communicate via the base stations 200. The base stations 200 will have backhaul connections (not shown) to allow for connections to the internet and other communications networks. The mobile communications network 100 further comprises one or more wireless access points 300 which define microcells 310. The wireless access points 300 transmit their signals at lower power levels and thus the microcells 310 cover a significantly smaller geographical area than the macrocells 210. A microcell can be used to provide network coverage in an area which macrocells do not cover and for which it is not economic to use a macrocell to cover that area. Alternatively a microcell can be deployed within a macrocell to provide greater network capacity such that mobile terminals in range of such a microcell can communicate via the microcell, the macrocell or the microcell and the macrocell simultaneously. The wireless access points 300 will also have backhaul connections (not shown) to allow for connections to the internet and other communications networks. The base stations and wireless access points preferably transmit and receive signals conforming to the LTE (Long Term Evolution) standard but it will be understood that other data standards could be used.

The wireless access points used to provide the microcells may be located within areas in which significant numbers of users are expected, for example shopping centres, train stations, high streets, etc. Alternatively, LTE functionality could be incorporated into devices such as the applicant's Home Hub which acts as xDSL modem, router and WiFi access point. In such a case, an LTE mobile terminal would be able to connect to the wireless access points and the data would be routed via the DSL link to a core network and then onwards to its destination. For such a wireless access point, the LTE will have a power output of approximately 27dBm which is likely to mean that the microcell will have a radius of approximately 30m. If many such wireless access points are deployed in an urban or suburban area then it is likely that there will be areas of overlap which are covered by multiple wireless access points.

LTE requires frequency synchronisation among the access points, and the degree of accuracy depends upon the size of the access point. Some modes of LTE operation also need timing phase synchronisation, which means that all the access points need to be closely aligned in absolute time with respect to one another. FDD (Frequency Division Duplex) requires accurate frequency synchronisation between microcells (between 100 and 250 parts per billion depending upon base-station class). TDD (Time Division Duplex) also needs this frequency synchronisation but in addition requires timing phase information, so that all of the microcells that have overlapping coverage can synchronise their transmit-receive cycles. If this is not achieved, unbearable interference can result. LTE-TDD needs phase synchronisation to within about 3 µs across any group of access points with overlapping coverage. Whether FDD or TDD, some advanced LTE features also need accurate phase synchronisation, for example the LTE-A feature CoMP (Co-operative Multipoint) is a kind of network MIMO that needs +/- 0.5 µs timing phase accuracy across the group.

Providing accurate frequency synchronisation is a much easier problem to solve than providing time phase synchronisation. One method of achieving time phase synchronisation would be to equip every femtocell with a very accurate clock, but this would be prohibitively expensive. Another is to monitor other networks, such as GPS or some other broadcast clock signals, but this is deemed not to be reliable enough when inside buildings.

A further option is to provide both frequency and time phase information over the backhaul network, and there are solutions for this, such as NTP, RFC1588v2 or NTR, usually used along with SynchE. Whereas frequency synchronisation can be cheaply provided using NTP, and this is standard practice for 3G microcells, it is very much more costly to provide time phase information over the backhaul if there is a segment of the path that uses xDSL technology. This presents a significant difficulty for microcells within houses, since xDSL is used in the majority of broadband installations. One known approach to this problem of timing phase synchronisation, is that microcells can monitor each other off-air by means of the receiver fitted to them. They can demodulate one another's transmissions and run an algorithm within themselves, to align the time phase with each other.

According to a first aspect of the present invention there is provided a method of operating a communications network, the network comprising a first base station, a second base station and one or more mobile terminals, wherein: signals from the first base station cover a first area; signals from the second base station cover a second area; and the first and second base stations are located such that a) there is an overlap area between the first area and the second area; and b) signals from the first base station are not received at the second base station, the method comprising the steps of: i) transmitting a synchronisation signal from the first base station to a mobile terminal in the overlap area; and ii) receiving the synchronisation signal from said mobile terminal at the second base station.

In step i) the first base station may transmit a synchronisation signal to a plurality of mobile terminals in the overlap area. The second base station may receive a synchronisation signal from a plurality of mobile terminals and select a synchronisation signal from one of the plurality of mobile terminals. The mobile terminal may be selected randomly. Alternatively, the mobile terminal may be selected on the basis of the received signal, for example the strength of the signal received from the mobile terminal.

The second base station may receive a synchronisation signal from a plurality of mobile terminals and determine a synchronisation signal on the basis of the data received from more than one of the plurality of mobile terminals. Data synchronisation values may be determined for each of the received signals and an average value calculated.

According to a second aspect of the present invention there is provided a base station comprising: a processor, volatile data storage, non-volatile data storage, and one or more wireless interfaces, the base station being configured, in use, to perform a method as described above. The base station may serve a microcell in a communications network.

According to a third aspect of the present invention there is provided a tangible data carrier for use in a computing device, the data carrier comprising computer executable code which, in use, performs a method as described above.

According to a fourth aspect of the present invention there is provided a terminal for use with a mobile communications network, the terminal being configured, in use, to: a) receive synchronisation data from a first base station, the terminal being located within the coverage of the first base station; b) transmit synchronisation data to a second base station, the terminal being further located within the coverage of the second base station.

Embodiments of the present invention will now be described, by way of example only, with reference to the accompanying drawings in which:
Figure 1 shows a schematic depiction of a known mobile communications network;
Figure 2 shows a schematic depiction of a part of a mobile communications network;
Figure 3 shows a schematic depiction of a wireless access point 300 according to the present invention; and
Figure 4 shows a graphical depiction of a flowchart which describes the process by which a wireless access point can obtain synchronisation data.

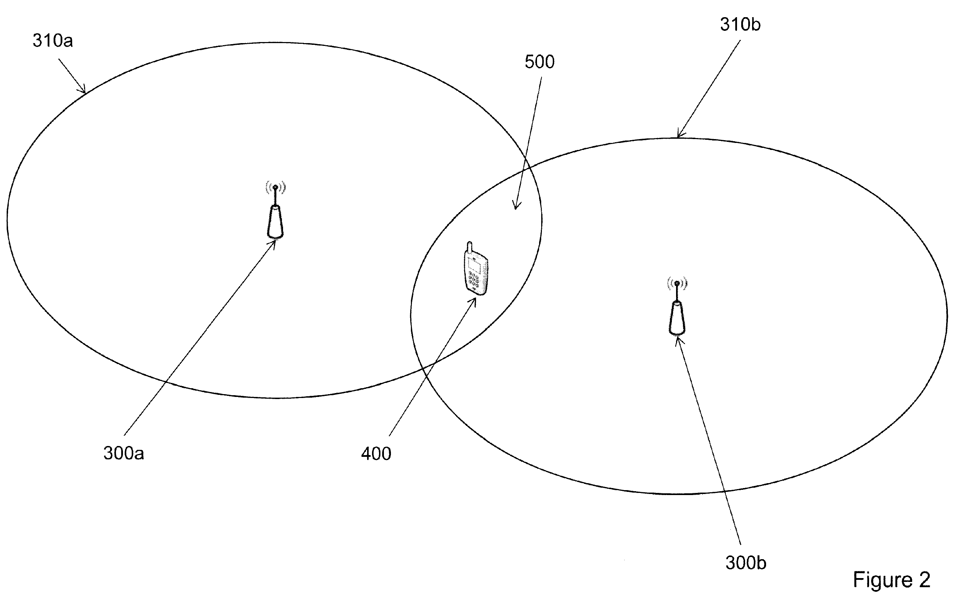

Figure 2 shows a schematic depiction of a part of a mobile communications network which shows first wireless access point 300a and second wireless access point 300b. The first wireless access point 300a defines a first microcell which has an associated first coverage area 302a. Similarly, the second wireless access point 300b defines a second microcell which has an associated second coverage area 302b. It can be seen from Figure 2 that the first wireless access point 300a is outside the second coverage area 302b and that the second wireless access point 300b is outside the first coverage area 302a. Furthermore, there is an overlap area 500 which is part of both the first coverage area 310a and the second coverage area 310b.

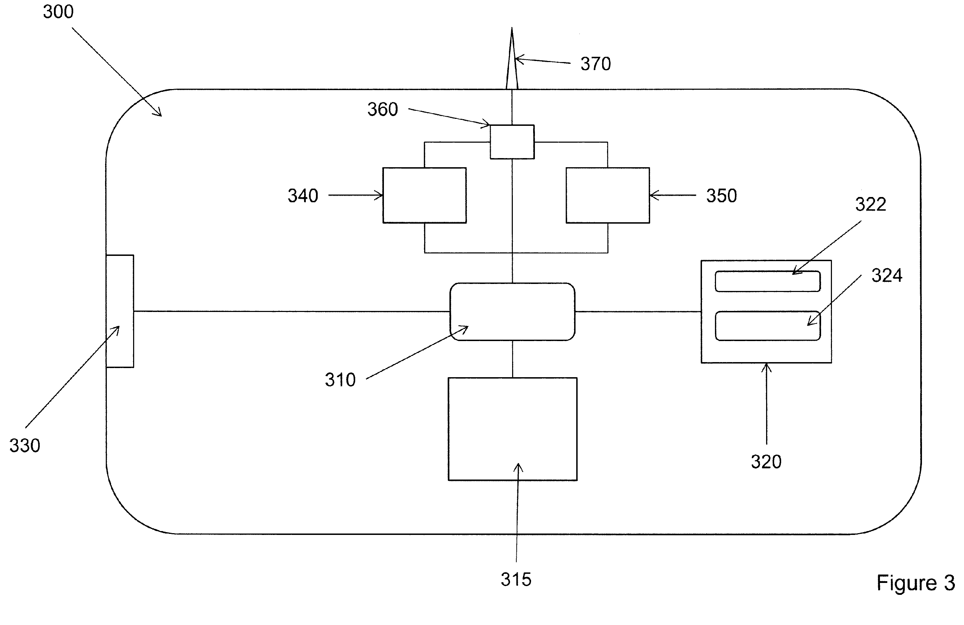

Figure 3 shows a schematic depiction of a wireless access point 300 according to the present invention which comprises a central processing unit (CPU) 310, volatile data storage means 315, non-volatile data storage means 320, communications network interface 330, LTE transmitter circuitry 340, LTE receiver circuitry 350, transmitter-receiver switch 360 and antenna 370. In operation, the CPU will execute code stored within the non-volatile data storage means and will hold data in the volatile data storage means. The wireless access point is able to communicate to further communications networks via the communications network interface. For example, the communications network interface may be an interface to a ADSL or VDSL line. The wireless access point can communicate with one or more mobile terminals via the antenna such that a mobile terminal can communicate to and from the further communications networks (it will be understood that the antenna of the wireless access point may comprise a smart antenna comprising a plurality of antenna elements). In addition to the LTE transmitter and circuitry the wireless access point may comprise WiFi circuitry and antenna, as well as other wireless interfaces.

Data which is to be sent to a mobile terminal will be received at the wireless access point at the communications network interface. The CPU will undertake the necessary processing for the data to be transmitted as an LTE signal and will instruct the transmitter-receiver switch to reserve the antenna for a time period. The LTE data will be sent to the LTE transmitter circuitry and then, during the reserved time period, the data is transmitted via the antenna. Similarly, if the wireless access point is to receive data from a mobile terminal then the antenna will be reserved for one or more time periods by the CPU and the LTE signals will be received at the LTE receiver circuitry. The received LTE signals are then sent to the CPU such that the payload of the LTE signals can be extracted and then forwarded to its destination, via the communications network interface. Although the previous discussion has focused on the use of software executed by the CPU to perform the processing of the LTE packets it will be understood that this functionality may be provided by the provision of one or more chips which are able to perform that processing. Such an alternative does not affect the functioning of the present invention.

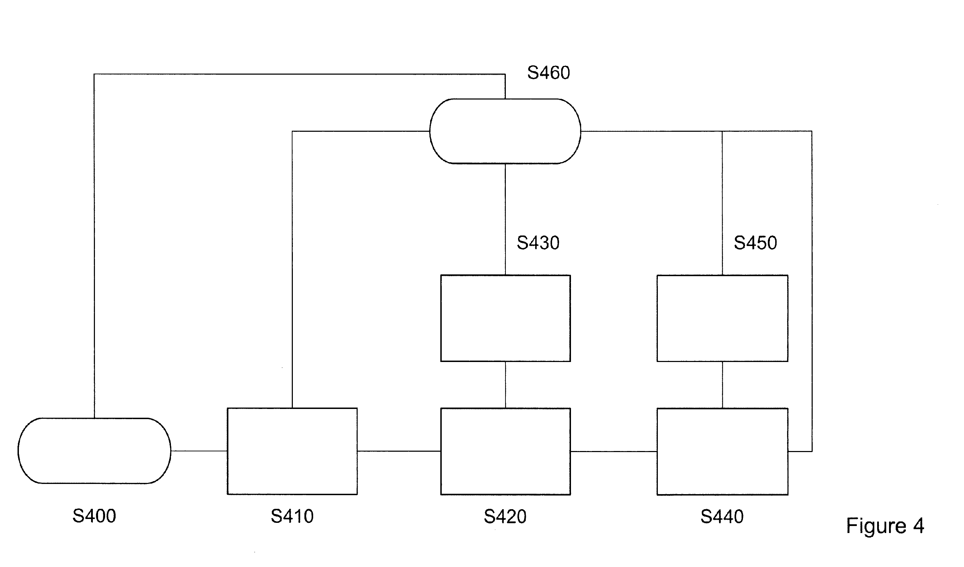

As has been discussed previously, it is vital in TDD LTE that each of the wireless access points are synchronised. Figure 4 shows a graphical depiction of a flowchart which describes the process by which a wireless access point can obtain synchronisation data. The process starts at step S400 and at step S410 the wireless access point attempts to synchronise by accessing network timing data. If this is successful then the process concludes at step S460. In the case that the wireless access point is connected to the network via a xDSL network (as discussed above) then this will not be possible. In such a case, the wireless access point does not transmit any data packets and the process continues to step S420. At step S420 the wireless access point will listen for one or more transmit periods: if there are other transmitting wireless access points within range then it will be able to receive transmissions from those wireless access points and therefrom derive the necessary synchronisation data. If such transmissions are received then the wireless access point will try and synchronise on the basis of the received data at step S430. Once synchronisation has been achieved then the process concludes at step S460. If no wireless access point transmissions are received then the process will proceed to step S440.

At step S440, the wireless access point will listen for one or more further transmit periods for transmissions from one or mobile terminals. If that mobile terminal is synchronised, for example via a further wireless access point, the unsynchronised wireless access point may be able to synchronise on the basis of the signals received from the mobile terminal. If the wireless access point can receive a signal from one or more mobile terminals then the wireless access point will attempt to synchronise at step S450. The wireless access point will determine if the mobile terminal has synchronised via a further wireless access point. The mobile terminal will only transmit if it is itself synchronised. If the AP in Figure 4 can receive transmissions from one or more mobile terminals, it must mean that the mobile terminal (or mobile terminals) are time phase synchronised to another AP (or other APs).

If the mobile terminal is synchronised then the wireless access point will align its transmit-receive timing phase with that of the mobile terminal or terminals. If there are no signals received from mobile terminals then the process ends at step S460, because it can assume that synchronisation is not needed in order to manage interference. It is expected that the synchronisation attempt would need to be repeated on a periodic basis, for example every few hours. It could also be instructed by the network to make a synchronisation attempt, if one or more mobile terminals in the area reported poor signal quality (e.g. in the CQI reports).

It will be apparent to those skilled in the field of mobile technology that steps S410-S430 are known. If, in step S440, the wireless access point receives signals from more than one mobile terminal then the synchronisation carried out in S450 may be on the basis of the data derived from the mobile terminal which has the strongest signal. Alternatively, an averaging (or similar statistical) process can be used to give a more accurate time phase synchronisation.

Referring to Figure 2, assume that first wireless access point 300a is synchronised, for example by receiving a signal from a further access point which is not shown in Figure 2. When mobile terminal 400 is turned on it will be synchronised with the first wireless access point 300a as it is within the first coverage area 310a. Assuming that the second wireless access point 310b cannot receive synchronisation data from the network or a further access point then the second wireless access point would not be able to synchronise using known techniques and thus could not transmit without causing significant interference. When following the process described above with reference to Figure 4, the second wireless access point would detect the transmissions from mobile terminal 400 and thus would be able to receive the necessary synchronisation data from the mobile terminal. Thus, it can be seen that the mobile terminal acts as a bridge, with the synchronisation data being transmitted from the first wireless access point to the second access point, via the mobile terminal.

If there are a plurality of mobile terminals present in the overlap area then the second wireless access point may determine the synchronisation data on the basis of one of the mobile terminals or a plurality of the mobile terminals. If the synchronisation data is determined on the basis of a single mobile terminal then this may be selected randomly or, for example, the mobile terminal with the strongest signal strength may be selected. In the case that the synchronisation data is determined on the basis of multiple mobile terminals then an average value can be determined. A value from every mobile terminal would be measured and the average value used. Such an average value should cancel out any Doppler shifts caused by movement of the mobile terminals. The second wireless access point can also compensate for time-of-flight errors by estimating the distance of the mobile terminal from the wireless access point on the basis of CQI (Channel Quality Indicator) and signal strength measurement reports.

As the present invention may be implemented on software within a base station (or mobile terminal), it may be possible to upgrade a conventional device to one which can perform a method according to the present invention. Computer code may be deployed to such a device via download, for example via the internet, or on some physical media, for example, DVD, CD-ROM, USB memory stick, etc. for which the router has an appropriate media reader. Similarly, a conventional tablet computer or smartphone may be adapted to operate in accordance with the present invention by the downloading and installation of one or more apps.

In summary, the present invention provides a method of synchronising base stations in a mobile communications network. A mobile terminal which is within the coverage area of both a first base station and a second base station can receive synchronisation information from the first base station and then then forward it to the second base station.

## Claims

1. A method of operating a communications network, the network comprising a first base station, a second base station and one or more mobile terminals, wherein: signals from the first base station cover a first area; signals from the second base station cover a second area; and the first and second base stations are located such that
a) there is an overlap area between the first area and the second area; and
b) signals from the first base station are not received at the second base station,
the method comprising the steps of:
i) transmitting a synchronisation signal from the first base station to a mobile terminal in the overlap area; and
ii) receiving the synchronisation signal from said mobile terminal at the second base station.

2. A method according to Claim 1, wherein in step i) the first base station transmits a synchronisation signal to a plurality of mobile terminals in the overlap area.

3. A method according to Claim 2, wherein the second base station receives a synchronisation signal from a plurality of mobile terminals and selects a synchronisation signal from one of the plurality of mobile terminals.

4. A method according to Claim 3, wherein the second base station selects a synchronisation signal from one of the plurality of mobile terminals randomly.

5. A method according to Claim 3, wherein the second base station selects a synchronisation signal from one of the plurality of mobile terminals in accordance with the strength of the signal received from the mobile terminal.

6. A method according to Claim 2, wherein the second base station receives a synchronisation signal from a plurality of mobile terminals and determines a synchronisation signal on the basis of the data received from more than one of the plurality of mobile terminals.

7. A method according to Claim 6 where data synchronisation values are determined for each of the received signals and an average value is calculated.

8. A base station comprising: a processor, volatile data storage, non-volatile data storage, and one or more wireless interfaces, the base station being configured, in use, to perform a method as described in any of Claims 1 to 7.

9. A base station according to Claim 8, wherein the base station serves a microcell in a communications network.

10. A tangible data carrier for use in a computing device, the data carrier comprising computer executable code which, in use, performs a method according to any of Claims 1 to 7

11. A terminal for use with a mobile communications network, the terminal being configured, in use, to:
a) receive synchronisation data from a first base station, the terminal being located within the coverage of the first base station;
b) transmit synchronisation data to a second base station, the terminal being further located within the coverage of the second base station.
